# EUROPEAN PATENT APPLICATION

(11) **EP 0 889 398 A2**
(43) Date of publication of application: **07.01.1999**
(21) Application number: 98305323.2
(22) Date of filing: 03.07.1998
(51) Int. Cl.: G06F 9/44

(54) **Computer system**

(30) Priority: 04.07.1997 GB 9714225; 29.08.1997 GB 9718414
(71) Applicant: Balaena Limited, London EC4A 2HD (GB)
(72) Inventor: Mather, Andrew Harvey, London, SW7 3EX (GB); Stannett, Michael Paul, Sheffield, S6 5AD (GB); Wadsworth, Jeremy James Hawley, Kings Lynn, Norfolk, PE30 3HS (GB)
(74) Representative: Abnett, Richard Charles

(57) **Abstract**

A computer system comprises a plurality of independent cells (12,14,16), each cell comprising code that is either executable or is enabled to execute or operate by an activator (18) associated with that cell. The cells are not directly operatively linked to each other and are capable of operation in the absence of each other. A trigger manager (20) is responsive to a notification that one of a number of specified conditions exists to associate a predetermined cell with that condition and enable that cell to execute or to operate. A plurality of indicators (22) are responsive to respective conditions and are each operative so that the trigger manager is notified of the existence of such respective condition. By keeping the cells independent, advantages accrue, e.g. failure of one cell does not stop operation of the others.

## Description

### BACKGROUND OF THE INVENTION

This invention relates to a computer system.

Known computer systems and communication protocols are typically based on a layered model concept. In such systems, the hardware, operating system, communication protocol and application software are treated as separate aspects of a structure.

To date software development has primarily been driven by the need to produce an application to satisfy a specific task. In an effort to manage the complexity of using computers, as much as possible is included in as few as possible well defined applications. A typical commercial program will have embedded in it a large number, possibly thousands, of subroutines and functions. This has resulted in a proliferation of Add-ins, Objects and other components which are useful, but which may still be targeted at specific applications, and which in any case must be explicitly recognised and integrated into a parent executable.

European Patent Application EP-A-0 727 741 (IBM/Chow et al) describes a data processing system for managing events in a graphic user interface in a manner independent of the operating system. The system is an object-oriented system, and each object includes an action that is triggered in response to an event. The system creates an event manager object for handling events from different operating systems, for registering events for the plurality of objects, and for triggering an action using the event manager object in response to detecting an event occurring in the system.

For background reading concerning modular software design, reference should be made to "Modular Software Design", by Mike Stannett and Sean Dickinson, published by Chartwell-Bratt.

### SUMMARY OF THE INVENTION

The invention in its various aspects is defined in the independent claims below, to which reference should now be made. Advantageous features are set forth in the appendant claims.

A preferred embodiment of the invention is described in more detail below with reference to the drawings. This embodiment takes the form of a computer system which comprises a plurality of independent cells, each cell comprising code that is either executable or is enabled to execute or operate by an activator associated with that cell. The cells are not directly operatively linked to each other and are capable of operation in the absence of each other. A trigger manager is provided which is responsive to a notification that one of a number of specified conditions exists to associate a predetermined cell with that condition and enable that cell to execute or to operate. A plurality of indicators are responsive to respective conditions and are each operative so that the trigger manager is notified of the existence of such respective condition. By keeping the cells independent, advantages accrue, e.g. failure of one cell does not stop operation of the others.

The computer system may include data storage means accessible by at least some of the cells, to provide for the availability of specified data to more than one cell. Preferably there is also included message management means arranged to enable indirect communication between cells. The message management means may also enable communication between the trigger means and the cells. The system may additionally include execution management means for controlling the allocation of processing power to the cells.

### BRIEF DESCRIPTION OF THE DRAWINGS

The invention will now be described in more detail, by way of example, with reference to the drawings, in which:
**Figure 1** is a block diagram of the program structure of a computer system embodying the invention;
**Figures 2 to 9** are flow charts illustrating the operation of a file parsing application program in accordance with the structure of Figure 1;

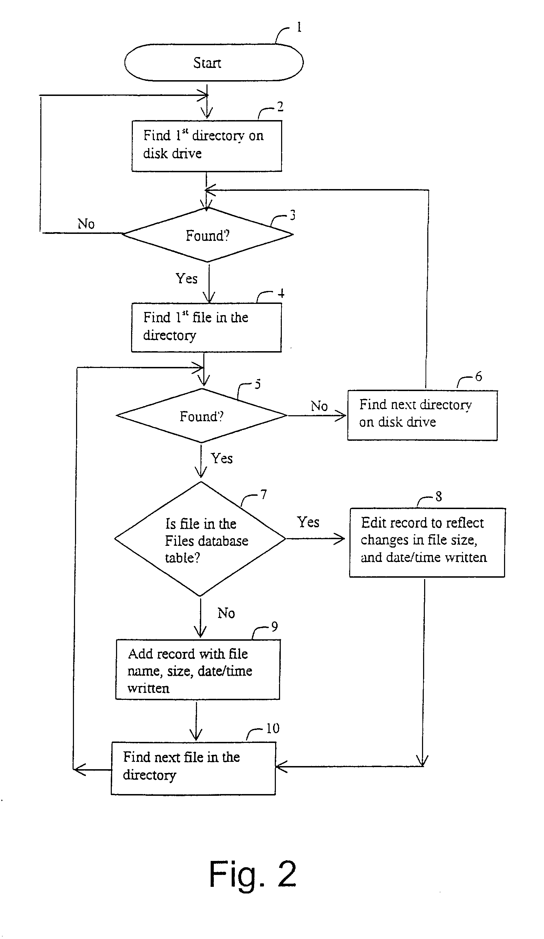

**Figure 2** illustrates the file finder process of the application;

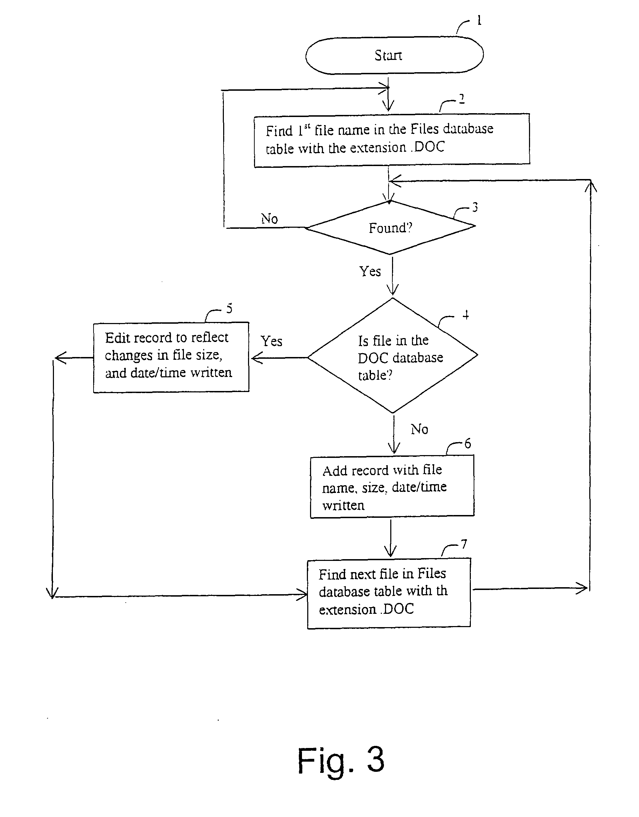

**Figure 3** illustrates the file data courier process of the application;

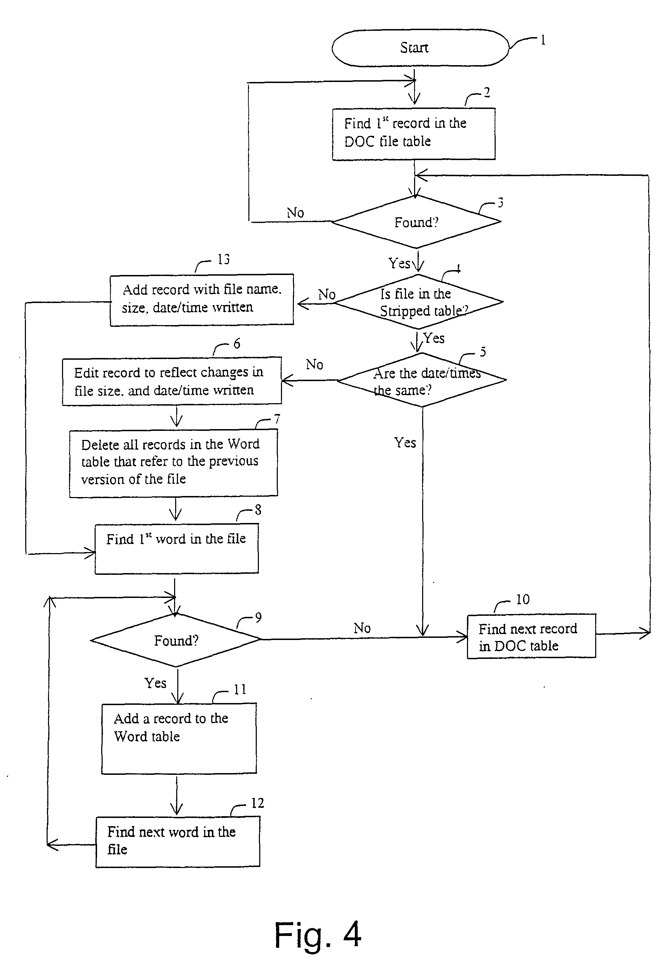

**Figure 4** illustrates the file word reference generator process;

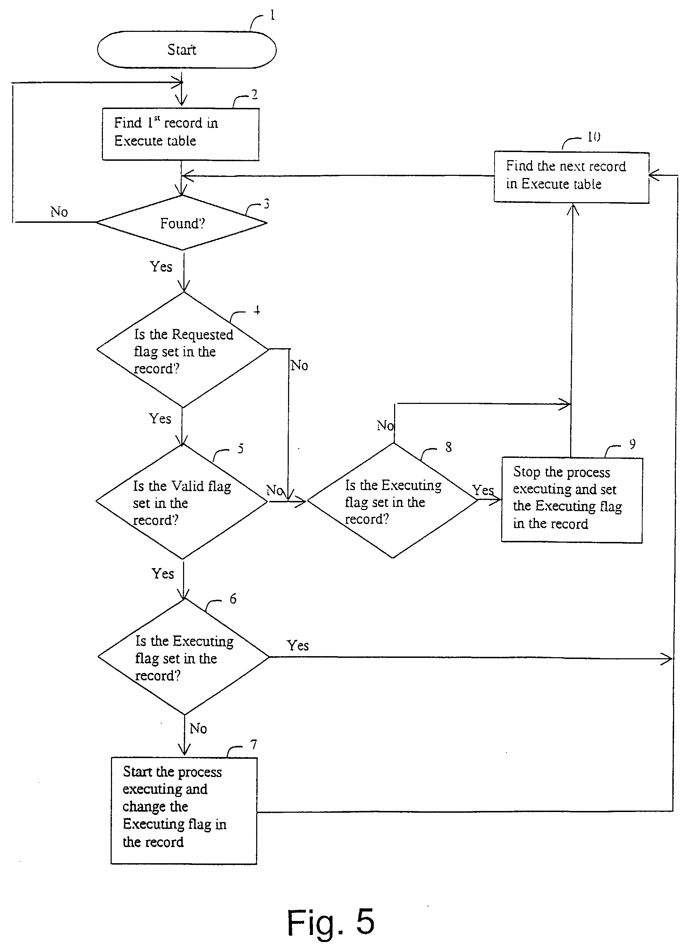

**Figure 5** illustrates a first execution engine;

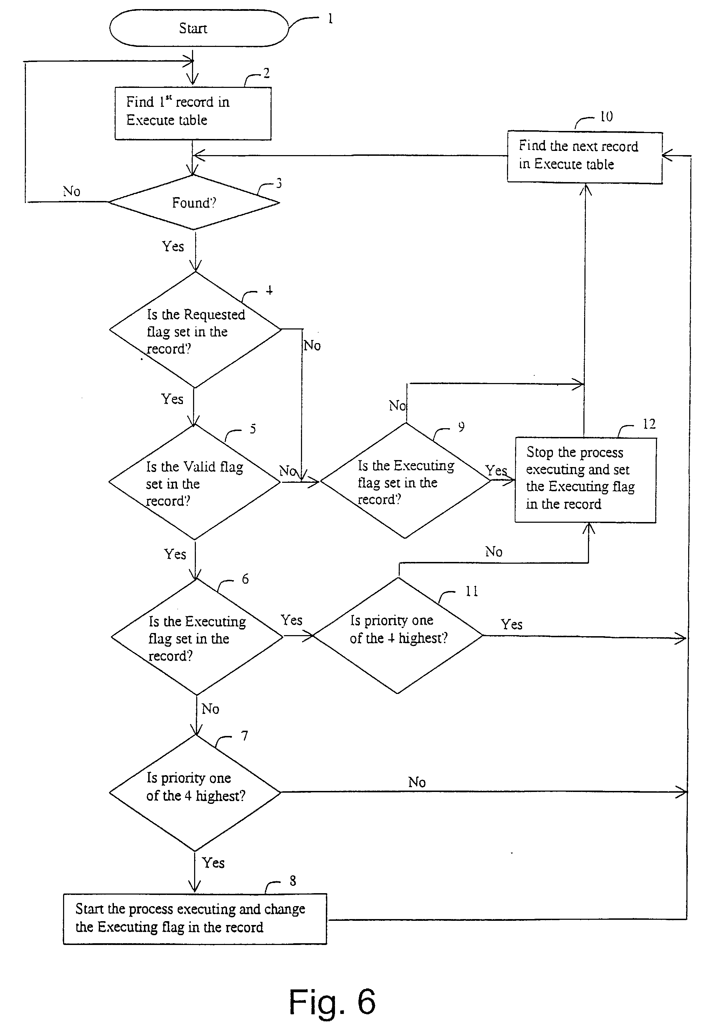

**Figure 6** illustrates a second execution engine, with priority;

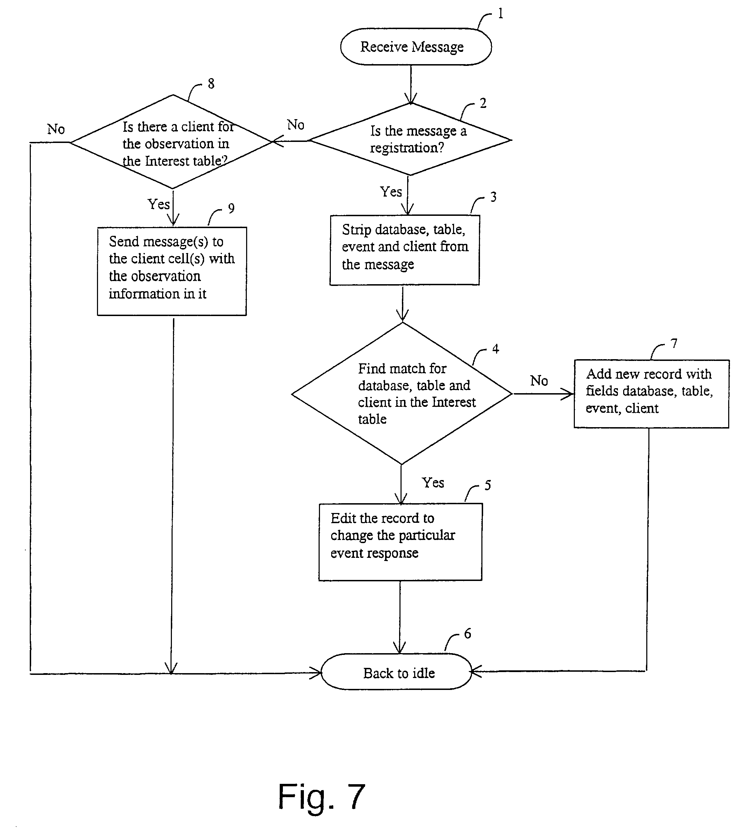

**Figure 7** illustrates the trigger manager process;

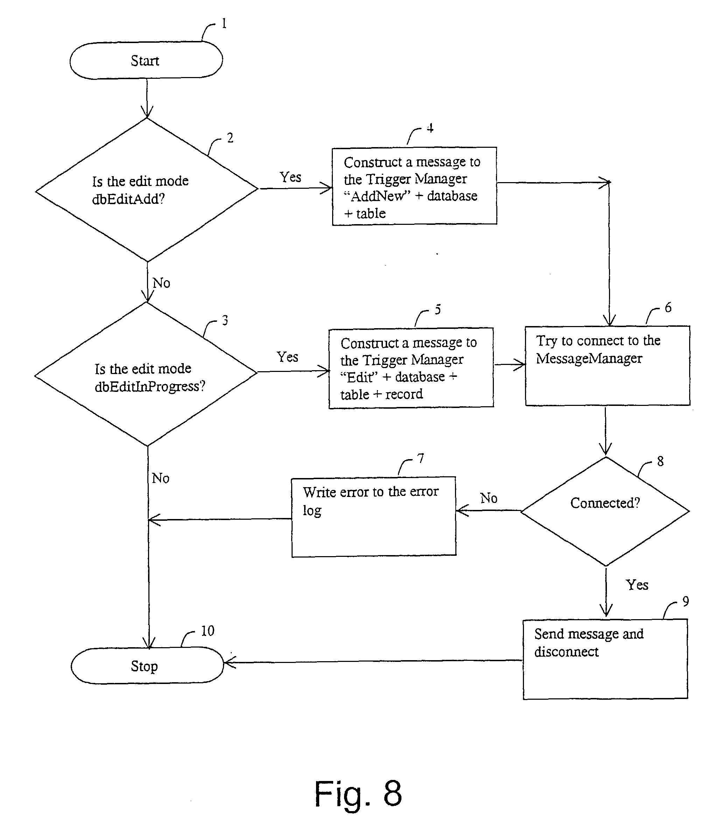

**Figure 8** illustrates the database wrapper, when a record is to be updated;

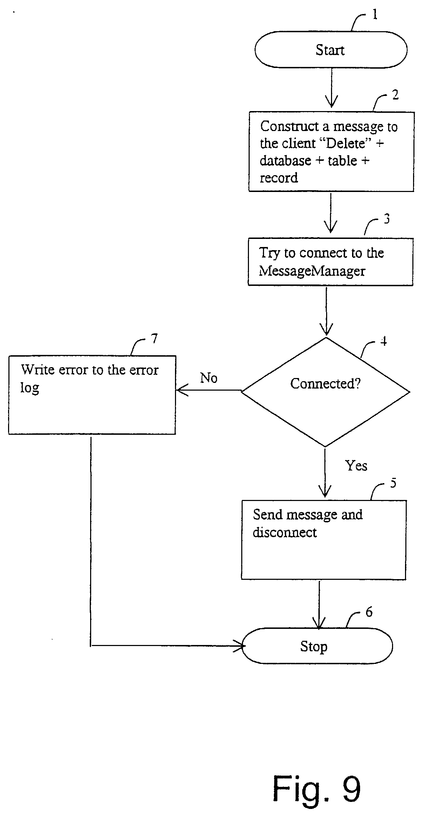

**Figure 9** illustrates the database wrapper, when a record is to be deleted; and

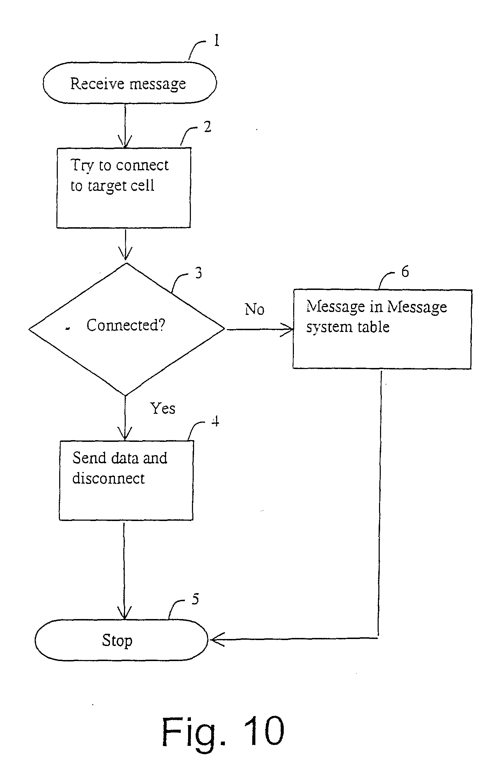

**Figure 10** illustrates the message manager process.

### DETAILED DESCRIPTION OF THE PREFERRED EMBODIMENT

The preferred embodiment of the invention to be described below provides for the integration of two criteria, that is independence and modularity, into a coherent whole. At the strictest level of independence, two processes need not even know about each other, or about the task overall that they fulfil.

In the present embodiment, a key feature of the enforcement of modular independence is the ready extensibility of the functionality of the system. Being independent processes, further processes may be added without interference to the existing process, save only in respect of capacity limitations. The actual nature of the achieved processing of existing processes should not be modified, else the cells are not indeed independent.

A further feature of the preferred embodiment of the invention is that not only may the functionality be extended directly, by the addition of new cells, but that the performance of that functionality with respect to such features as timing, context and speed may be further enhanced, by increasing the sophistication of the system level cells - that is to say, those cells whose key role is not to perform the work, but to observe the performance of the cells performing the work, and adjust the support for their processes accordingly.

In this computing environment, an application is constituted by the sum of the performance of a plurality of cells. The independence of the cells, contributing to the achievement of a task, means that a single cell may be contributing to the achievement of several tasks. It no longer makes sense therefore to be constrained to think of individual applications. The sum of the plurality of cells may therefore be regarded as a cellular 'environment', and it will then be the intention of the individual system designer of the environment that it have sufficient and appropriate cells to support the set of existing and anticipated tasks that the environment is expected to fulfil.

It is no longer necessary to compile irrevocably large amounts of program code into a single monolithic executable to produce the solution. Rather, many small individually-useful cells may be compiled, and allowed to operate in observed satisfaction of the desired task. An application, defined as the sum of a plurality of independent executables, is fixed only inasmuch as the selection of cells is fixed. Therefore, for a given set of cells, the scope of the application is well-defined, but it is not limited.

A further feature of the system is that the addition, subtraction or modification of these cells will modify the environment according to the needs and satisfaction of the system designer. This may be performed without interruption of the system. This may render the need to purchase a series of upgrades redundant. The evolution of the user's environment may be achieved by the removal or addition of individual cells, having no direct impact on existing or future cells, so that the need to redesign, recode, remove and reinstall entire applications, packages or environments is avoided.

A 'Cellular Operating System' may be regarded as including a set of components which, when provided in addition to an operating system, allow processes which are designed consistent with the features described as being part of the system to operate successfully on the operating system. It allows for the execution of cells and the passing of messages to and from cells. A cell is an autonomous computational process that interacts with the rest of the cellular operating system.

An executable in computing is clearly not self-sustaining. It may only respond to its environment while it has access to the CPU (central processing unit). When stored on disk, and not 'executing', it may not reasonably be considered to be 'active'. An executable in computing is clearly also not self-initiating. It requires a call to the underlying operating system by a third party to initiate its processing (which is then sustained by the CPU).

At present, programs are often stored on hard disk until they are needed, and are only executed at that time. The preferred system provides a set of facilities to allow an observer to determine under what circumstances a process is to be run. These comprise a number of lists identifying whether a process has work to do, whether it is appropriate to do that work now, and what priority to assign that work. Further, a component may be provided to ensure that, where possible, processes are run which satisfy the conditions for doing work, now, consistent with the capacity constraints of the system. This component is called an Execute Engine.

By providing these low-level system components, a complex and sophisticated processing environment which uses the capacity of a computer to the full, without overloading, is obtained. It is possible to add design, observation, management and optimisation tools to the system. It will be noted that by process independence, no restriction is placed on the provision of these facilities.

Cells are not "bound" to other cells, and thus differ from objects in object-oriented programming systems. There is no direct "public" access to a cell. All that a cell is allowed to do is to pass a message to the messaging domain with a target destination of another cell, and to read/write data into the data space.

Optionally cells may only be allowed to execute within a specified time period, e.g. during the working day. There is also preferably prioritization, so that higher priority cells start execution before low priority ones. The priority value is an absolute value for the cell; it does not change dynamically, so for example it does not take into account the context of any messages for the cell.

In the example described below, the cells are operable independently of each other. Independent processing is a relationship whereby: Cell A is independent of Cell B if and only if for a given allocation of process cycles and memory, Cell A assumes, expects or is aware of no aspect of Cell B, nor does Cell B's processing have any impact on the performance or nature of the processing by cell A. For instance, the process of writing to a table a current list of files to be parsed, and reading from that table to decide which file to parse next, are independent processes. Beyond CPU limitations, no locking or other phenomenon exists to interfere with the processing of the two requests.

Autonomous processing recognises that two cells, A and B, may be functionally independent: that is to say, that the nature of the processing performed by B is independent of the existence or otherwise of cell A; but that for a given set of CPU cycles and memory, the performance of cell A may be impacted indirectly nevertheless by Cell B.

Thus cells which satisfy independence at either the fullest or autonomous levels operate independently. A process which requires information or facilities from any other cell in order to operate at all, fails as a candidate for a cell, because a cell must not require the existence or non-existence of another cell for its own satisfaction.

More may be requested than may be within the capacity of the machine to execute. A further desirable feature of the system therefore is a list or facility to nominate a ranking or priority for processes.

Being independent, any of the processes contributing to the overall solution may be run separately, with or without the particular presence of any one or a number of the other contributing processes. Further, two processes may be run concurrently without impact, the one on the other. One process may be shut down or switched off without detriment to another.

Thus the performance of the environment of the whole may be readily and speedily modified by the addition/removal of processes; and the allocation/de-allocation of CPU processing power to those processes.

This provides for an environment of abnormal flexibility, not simply by extensibility of functionality, but also by tuning to the local and immediate needs of the user environment.

### BASIC PROGRAM STRUCTURE

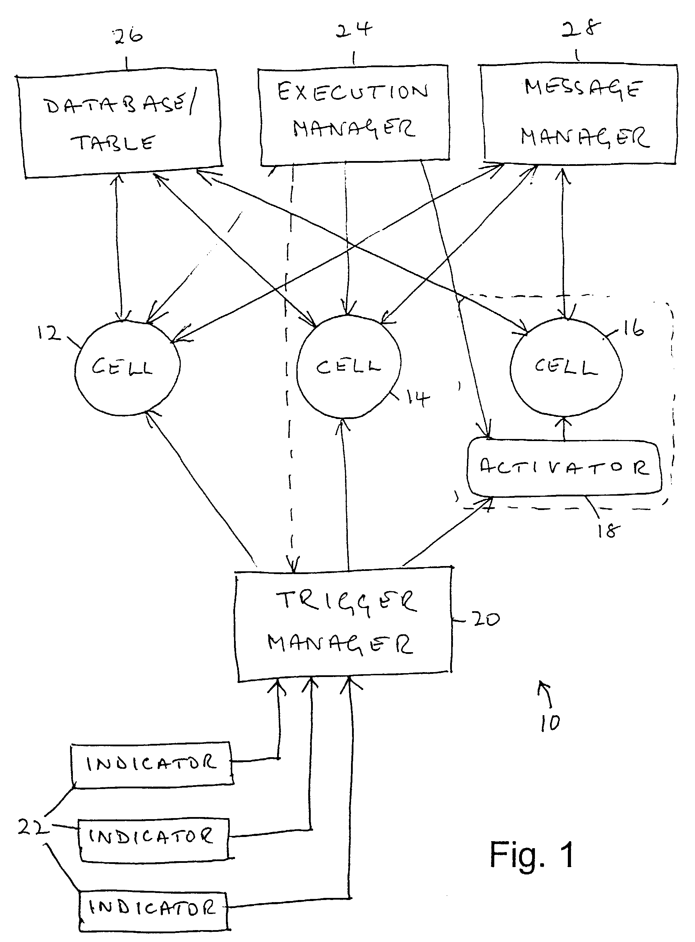

Figure 1 of the drawings shows the basic program structure of a computer system embodying the invention. The program structure 10 includes three cells 12, 14 and 16. Cells 12 and 14 are executable cells, whereas cell 16 has a separate activator 18 associated with it in order to make it executable or operable. It will be appreciated by those skilled in the art that the various regions shown on Figure 1 represent different sections of code forming the computer system.

The cells 12, 14 and 16 are independent and autonomous, in the manner discussed above. That is, they do not communicate directly with each other and are not directly operatively linked to each other, and they can operate independently of each other.

The program structure 10 also includes a trigger manager 20. The trigger manager 20 is coupled to the cells 12 and 14 and to the activator 18 for the cell 16 so as to be able to render the cells into an operable state. The trigger manager receives input from a plurality of trigger condition indicators 22. Each trigger indicator 22 is responsive to a respective condition, which may simply be the existence of a specified character string. The trigger indicator causes the trigger manager to check for a cell associated with that condition and to instruct the cell of the existence of the trigger condition so that the cell may commence operation, e.g. execution. The trigger manager may not directly instruct execution of the code, but places the cell in condition where it can execute, e.g. allocates memory for it. As described, the indicators 22 take the initiative and advise the trigger manager when a relevant condition exists. Alternatively, the trigger manager could poll the indicators to locate this information.

The exemplary program structure 10 may operate on any suitable hardware, for example a personal computer (PC), and will require an operating system. The program may be developed on an IBM Personal Computer compatible computer, using the Microsoft™ Windows NT 4.0 Workstation operating system. The program may be written with Microsoft™ Visual C++ version 5.0 with the aid of the Microsoft™ Foundation Class Library and Microsoft Jet Database engine. For a basic description of a computer system reference may be made to any standard reference work in the field. In addition it will be seen that EP-A-0 727 741 referred to above describes a data processing personal computer system of typical hardware construction.

The program structure of the preferred embodiment also includes three other components, as follows. First, the program structure includes an execution manager 24. The execution manager is coupled to the cells 12 and 14, to the activator for cell 16, and optionally to the trigger manager, in order to control the allocation of system resources, e.g. CPU (central processing unit) processing power to the cells and other code requiring it. The execution cycle of the program structure may be controlled by the execution manager 24.

Secondly, the program structure includes a database or table 26, or other data storage region, which the cells can communicate with for passive writing and reading of data. Data may thus be shared between cells, that is the data storage means is accessible by at least some of the cells, to provide for the availability of specified data to more than one cell.

Finally, the program structure includes a message manager 28 which communicates directly with each of the cells and allows the passing of messages between cells. Nevertheless the independence of the cells is maintained so that failure of one cell does not stop other cells from working. Where there is a message manager, then the trigger manager may, and preferably does, also communicate with the cells via the message manager.

While just three cells are shown in the simple embodiment described, normally there will be a much larger number of cells in a real application. One application will now be described in more detail, namely a file parsing application.

### EXAMPLE - A FILE PARSING APPLICATION

An example of the invention is further described below, and with reference to the remaining figures of the drawings.

The present embodiment provides for the satisfaction of the task of parsing the document files to be found on a drive into a references table which comprises each word to be found in each file, and a reference as to the files in which they are found.

The task is satisfied in functionality by the independent processes of a) FILE FINDER: finding the files which exist on a drive; b) DATA COURIER: filtering and transporting those files to a list containing the paths of flies to be parsed; c) REFERENCE GENERATOR: a file parser which parses the files into constituent words; and further adds the words with a reference to the file into a references table. These three processes are configured as three cells such as cells of the type 12, 14 in Figure 1. They are controlled by a trigger manager 20. The operation of the cells will first be described with reference to the flow charts of Figures 2 to 4.

The task is satisfied in performance by the provision of a fourth system or process, an execute engine, corresponding to the execution manager 24 of Figure 1, and an associated list of processes to be run. The execute engine, the flow chart for which is shown as Figure 5, then ensures that the necessary processes (here, the processes a, b and c above) are indeed run.

### 1. File Finder Process

The purpose of the file finder process, illustrated in Figure 2, is to find all the files on a computer disk drive and to place the details of those files, name, size and date/time of writing in a database table containing those fields. The process is designed to be continuous (as long as the computer on which it is executing is switched on and the program loaded), so that any new files added to the disk drive are always dealt with by the program. The disk drive that is scanned for files is supplied as an argument to the program at startup.

The various elements making up the file finder process of this invention and their interrelationships are shown in Figure 2. The program function will now be described, referring to the step numbers in Figure 2.
Step 1. The program starts execution.
Step 2. There is an attempt to find the first file directory on the disk drive.
Step 3. Allows the program to branch to Step 4 if a directory was found in Steps 2 or 6, or to return to Step 2 if no directory is found.
Step 4. Attempts to find the first file in the directory found in Step 2 or 6.
Step 5. Is a conditional branch which depends on whether a file was found in Step 4 or 10. If the answer is yes, then continue to Step 7, otherwise go to Step 6.
Step 6. Finds the next file directory on the disk drive and continues from Step 3.
Step 7. Is a conditional branch that branches to Step 8 if the file found in Step 4 or 10 has already been recorded in the Files database table, otherwise the branch is to Step 9.
Step 8. Edits the record in the Files database table found in Step 7 and updates the file size and date/time it was written to the disk.
Step 9. Adds a new record to the Files database table with the file name, size and date/time last written from the data found in Step 4 or 10.
Step 10. Finds the next file in the file directory found in Step 2 or 6 on the disk drive.

Table 1 below illustrates the format of the table in the database used in the file finder process, and is used to store the data about the files found in the process.

**Table 1**

| ID | File Name | File Date | File time | File size |
|---|---|---|---|---|
| | | | | |

where the following definitions apply:
- ID: Primary key value (the primary index of the database table), is a 32 bit number (LONG) which automatically increments when a new record is added to the database.
- File name: Location of the file on the disk drive in the native format of the operating system e.g. C:\MYDIR\HELLO.TXT which is a string up to 255 characters long.
- File date: Last recorded date on which the file was written to the disk drive in the database native date format.
- File time: The last recorded time at which the file was written to the disk drive in the database native time format.
- File size: The files size in bytes as a 32 bit number (LONG).

### 2. File Data Courier Process

The purpose of the file data courier process is to find all the files in the Files database table (Table 1 described above) which have the file name extension DOC, and to place their details, name, size and date/time of writing in a database table containing those fields. The process is designed to be continuous (as long as the computer on which it is executing is switched on and the program loaded), so that any new records added to the Files database table are always dealt with by the program.

The various elements making up the file data courier process and their interrelationships are shown in Figure 3. Below is a description of the program function, all numbers refer in this instance to Steps of Figure 3.
Step 1. The program starts execution.
Step 2. There is an attempt to find the first file name in the Files database table that has the extension DOC.
Step 3. Allows the program to branch to 4 if a file name was found in Step 2 or 7, or to Step 2 if no file name is found.
Step 4. Is a conditional branch that branches to Step 5 if the file name is found in the DOC database table, otherwise the branch is to Step 6.
Step 5. Edits the record in the DOC database table found in Step 4 and updates the file size and date/time it was written to the disk.
Step 6. Adds a new record to the DOC database table with the file name, size and date/time last written from the data found in Step 4.
Step 7. Finds the next file in the Files database table with the extension DOC

Table 2 below illustrates the format of the DOC table in the database used in the file data courier process, and is used to store the data about the files found by the process.

**Table 2**

| ID | File Name | File Date | File time | File size |
|---|---|---|---|---|
| | | | | |

where the items are defined as with Table 1, save that in this case the File Name will be of the form e.g. C:\MYDIR\HELLO.DOC.

### 3. File Word Reference Generator Process

The purpose of the word reference generator process is to find all the words contained in the files that appear in the DOC database table, Table 2, and place them in a database table containing the words and the files which they come from. The process is designed to be continuous (as long as the computer on which it is executing is switched on and the program loaded), so that any new records added to the DOC database table are always scanned by the program.

The various elements making up the word reference generator process and their interrelationships are shown in Figure 4. Below is a description of the program function, all numbers refer to elements of Figure 4.
Step 1. The program starts execution.
Step 2. There is an attempt to find the first record in the DOC database table.
Step 3. Allows the program to branch to Step 4 if a record was found in Step 2 or 10, or to Step 2 if no record is found.
Step 4. Is a conditional branch which depends on whether the file found in Step 2 or 10 appears by file name in the Stripped table, if the answer is yes then continue to Step 5, otherwise go to Step 13.
Step 5. Is a conditional branch which depends on whether the file found in 2 or 10 and the one found matching it by name in the Stripped table have the same date and time, if the answer is yes then continue to Step 10, otherwise go to Step 6.
Step 6. Edits the record in the Stripped database table found in Step 2 or 10 and updates the file size and date/time it was written to the disk.
Step 7. Deletes all the records in the Words table that refer to the file found in Step 2 or 10.
Step 8. Finds the first word in the file found in Step 2 or 10.
Step 9. Is a conditional branch that branches to Step 11 if a word was found in Step 8 or 12, otherwise go to Step 10.
Step 10. Finds the next record in the DOC database table.
Step 11. Adds a new record to the Word database table with the word and reference to the record in the Stripped database table that contains the filename.
Step 12. Finds the next word in the file found in Step 2 or 10.
Step 13. Adds a new record to the Stripped database table with the file name, size and date/time last written from the data found in Step 2 or 10.

Table 3 below illustrates the format of the Stripped table in the database used in the file word reference generator process.

**Table 3**

| ID | File Name | File Date | File time | File size |
|---|---|---|---|---|
| | | | | |

Table 4 below illustrates the format of the Words table in the database used in the file word reference generator process.

**Table 4**

| ID | Stripped ID | Word |
|---|---|---|
| | | |

where:
- ID: Primary key value (the primary index of the database table), is a 32 bit number (LONG) which automatically increments when a new record is added to the database.
- Stripped ID: 32 bit number (LONG) that matches that used as the ID field for the record in the Stripped table that contains details of the file that the word has come from.
- Word: A string containing a word, which can be a maximum of 20 characters long.

### 4. Execution Engine with Priority

The execution engine with priority is illustrated in the flow chart of Figure 6 which is an alternative to the simpler flow chart of Figure 5. The purpose of the execution engine with priority process is to ensure that all the processes that have been requested and are allowed to be executed at the present moment are executing if they have one of the highest four priorities. Conversely it should ensure that no processes that have not been requested or are not valid to execute now are executing, or at least ones that are not in the top four priorities. The flags for determining whether a process has been requested, if it is valid to execute now, whether it is executing and the priorities are stored in the Execute table. The process is designed to be continuous (as long as the computer on which it is executing is switched on and the program loaded), so that any new records added to the Execute database table are always scanned by the program.

The various elements making up the execution engine with priority process and their interrelationships are shown in Figure 6. Below is a description of the program function, all numbers refer to elements of Figure 6.
Step 1. The program starts execution.
Step 2. There is an attempt to find the first record in the Execute database table.
Step 3. Allows the program to branch to Step 4 if a record was found in Step 2 or 10, or to Step 2 if not.
Step 4. Is a conditional branch that branches to Step 5 if the Requested flag is set in the record, otherwise the branch is to Step 9.
Step 5. Is a conditional branch that branches to Step 6 if the Valid flag is set in the record, otherwise the branch is to Step 9.
Step 6. Is a conditional branch that branches to Step 11 if the Executing flag is set in the record, otherwise the branch is to Step 7.
Step 7. Is a conditional branch that branches to Step 8 if the priority is one of the four highest, otherwise the branch is to Step 10.
Step 8. Starts the process executing and sets the Executing flag to true.
Step 9. Is a conditional branch that branches to Step 12 if the Executing flag is set in the record, otherwise the branch is to Step 10.
Step 10. Finds the next record in the Execute database table.
Step 11. Is a conditional branch that branches to Step 10 if the priority is one of the four highest, otherwise the branch is to Step 12.
Step 12. Stops the process executing and sets the Executing flag to false.

Table 5 below illustrates the format of the Execute table in the database used in the execute engine with priority process, and is used to store the data about the processes.

**Table 5**

| ID | Press location | Requested | Valid | Priority | Executing |
|---|---|---|---|---|---|
| | | | | | |

where:
- ID: Primary key value (the primary index of the database table), is a 32 bit number (LONG) which automatically increments when a new record is added to the database.
- Process Location: Location of the file on the disk drive in the native format of the operating system e.g. C:\MYDIR\HELLO.EXE that is a string up to 255 characters long.
- Requested: A Boolean value indicating whether the process has been requested to execute.
- Valid: A Boolean value indicating whether the process is currently valid to execute.
- Priority: A double precision floating point number indicating what the priority of the process is, higher numbers mean higher priority.
- Executing: A Boolean value indicating whether the process is currently executing.

Note that at present only the four highest processes can be executed. It is possible to determine how many and which processes can be executed by the execution engine if computing resources (e.g. CPU, RAM etc.) are taken into consideration in a more complex system.

The cells constituting the system have now been described. The trigger manager corresponding to the trigger manager will now be described with reference to the flow chart of Figure 7, which illustrates the trigger manager process.

### 5. The Trigger Manager Process

The trigger manager process passes on notifications of events, in this embodiment changes in database tables, to cells that have registered an interest in events (additions, changes of existing data and deletions). The process flowchart is shown in Figure 7. The steps are again sequentially numbered and the following refer to the steps of Figure 7.
Step 1. The program receives a message.
Step 2. Is a conditional branch to Step 3 if the message is a registration, otherwise branch to Step 8
Step 3. The client cell name and the other parameters are separated out from the message.
Step 4. A query determines if a record in the Interest table (see below) contains the client cell name, the database name, and table name that were extracted from the message. If the query successfully returns a record then a conditional branch is taken to Step 5 otherwise go on to Step 7.
Step 5. Edit the existing record with the particular event response indicated in the message.
Step 6. The program enters an idle state waiting for the next message.
Step 7. Add a new record with the fields as taken from the message and continue to Step 7.
Step 8. Is a conditional branch to Step 9 if there is at least one client for the observation, otherwise Step 6.
Step 9. Send message(s) to the client cell(s) containing the information regarding the observation.

The database corresponding to the data storage region 26 of Figure 1 incorporates a core database and an associated database wrapper.

The database wrapper includes a list of trigger conditions and associated messages. If a trigger condition is met, then the message associated with it is sent out via the Message Manager (see below). There may be a second part of the wrapper, in the form of a cell that sets or resets flags in the database. If a message has been received to change a trigger, then the database is searched to discover if a relationship exists between the client and the database/table. If it does, then this relationship is modified, by the request in the message; otherwise a new record is added to take account of the trigger request. This is shown at Step 7 in Figure 7.

The trigger manager stores the information that it requires in its own interest database table as described below.

### 6. The Interest Database Table

The Interest Database Table has entries (columns) corresponding to the items set out below in Table 6.

**Table 6**

| **Field Name** | **Description** |
|---|---|
| ID | Primary key value (the primary index of the database table) is a 32 bit number (LONG) which automatically increments when a new record is added to the database. |
| Database | The location on the computer of the database file as a string up to 255 characters in length. |
| Table | The name of the database table that the interest is registered in as a string up to 255 characters in length. |
| AddNew | A Boolean value indicating whether the client is interested in being notified when a new record has been added to the database table. |
| Edit | A Boolean value indicating whether the client is interested in being notified when a record has been edited in the database table. |
| Delete | A Boolean value indicating whether the client is interested in being notified when a record has been deleted in the database table. |
| Client | A string up to 255 characters in length containing the name of the client cell to be notified. |

The trigger manager and the client cell communicate through the passing of messages via a message manager process. The trigger manager expects to receive a message of the format:-

Database=AAAA, Table=BBBB, Event=CCCC, Client=DDDD where:-
AAAA is the location on the computer of the database file as a string up to 255 characters in length;
BBBB is the name of the database table that the interest is registered in as a string up to 255 characters in length;
CCCC is the type of event in the table, which can be AddNew, Edit or Delete;
DDDD is the name of the client cell to be notified.

The output format of the notification to the client cell is:-
Database=AAAA, Table=BBBB, Event=CCCC

Thus it is seen that the trigger manager is responsive to indications of specified conditions and finds which cells are associated with those conditions and then passes to those cells instructions via the message manager, if there is one.

### 7. The Database

As noted above, the database corresponding to the data storage region 26 of Figure 1 incorporates a core database and an associated database wrapper. The database wrapper sends messages containing observations on changes to data within tables in the database to the trigger manager. This may be implemented as a library, which extends the standard database object classes provided by the Microsoft Foundation Class Library. There are two extensions to the standard library, one covering the update of record (after it has been added or edited) and the other covering the deletion of a record as shown by the flowcharts in Figure 8 and Figure 9 respectively.

### 7A. Updating a record (Figure 8)

Step 1. Start executing the update record routine.
Step 2. Is the record being added? If so then branch to Step 4, otherwise to Step 3.
Step 3. Is the record being edited? If so then branch to Step 5, otherwise to Step 10.
Step 4. Construct a message of the form:
   "Database=AAAA, Table=BBBB, Event=AddNew, Primary Key=CCCC"
where:
AAAA is the location of the database file on a disk drive,
BBBB is the table that the record has been added to and
CCCC is the value of the primary key for the record.

Step 5. Construct a message of the form:
   "Database=AAAA, Table=BBBB, Event=Edit, PrimaryKey=CCCC"
Step 6. Attempt to connect to the Message Manager cell.
Step 7. Write an error to the error log.
Step 8. Branch to Step 9 if connected to the Message Manager, otherwise Step 7.
Step 9. Send the message to the Message Manager.
Step 10. End the Update routine.

### 7B. Deleting a record (Figure 9)

Step 1. Start executing the delete record routine.
Step 2. Construct a message of the form:
   "Database=AAAA, Table=BBBB, Event=Delete, PrimaryKey=CCCC"
where:
AAAA is the location of the database file on a disk drive,
BBBB is the table that the record has been deleted and
CCCC is the value of the primary key for the record.

Step 3. Attempt to connect to the Message Manager cell.
Step 4. Branch to Step 5 if connected to the Messenger Manager, otherwise Step 7.
Step 5. Send the message to the Message Manager.
Step 6. End the Delete routine.
Step 7. Write an error to the error log.

### 8. The Message Manager Process

The Message Manager, corresponding to the message manager 28 of Figure 1, is responsible for enabling indirect communication between cells by passing messages to and from cells using a standard messaging system, such as Dynamic Data Exchange (DDE), Sockets etc. As messages can be regarded as part of the data space, messages about messages can be generated. If the Message Manager is unable to pass the message to the destination cell then the message is placed in the Message database table. The flowchart for this is shown in Figure 10. Referring to Figure 10 the steps are as follows:
Step 1. Receive a message from a cell.
Step 2. Attempt to connect to the target cell.
Step 3. If connected to the target cell proceed to Step 4, otherwise to Step 6.
Step 4. Send the message to the target cell.
Step 5. Return to an idle state, waiting for further messages to be received
Step 6. Place the message, name of the sender, and name of the target cell in the Message database table.

### 9. The Message Table

The message also forms part of the data storage 26 in Figure 1, and operates to provide data storage for messages. The format of the Message Table is as indicated in Table 7.

**Table 7**

| **Field Name** | **Description** |
|---|---|
| ID | Primary key value (the primary index of the database table), is a 32 bit number (LONG) which automatically increments when a new record is added to the database. |
| Sender name | Name of the sender cell in a string up to 255 characters in length. |
| Target name | Name of the target cell in a string up to 255 characters in length. |
| Message body | The text of the message in a string up to 255 characters in length. |

### ALTERNATIVE IMPLEMENTATIONS

The above example pertains to but is not limited to the provision of a series of references from a words list to a set of files containing those words on a personal computer. It will be clear from the description of the embodiment above that any number of complex tasks may make use of the same system, by appropriate substitution of readily determinable data processes.

Moreover, the selection of hardware and software in no way restricts the invention, whose necessary structure may be easily transposed to alternative standard platforms and languages.

The preferred system described has as a key feature that it is independent even of the structure or number of the processors. While the locally developed code would need to be recompiled to take advantage of newer processors, which is typical of any industry executable, the present system has as a further feature that it is immediately and readily transportable to an infrastructure of an unconstrained plurality of processors. This is readily seen, since each cell is by definition an independent process. Being independent, any cell or cells may run on any compatible processor.

In one particular modification, if the Message Manager is split into two distinct aspects of receiving and transmitting, more information is made available to the system. For example if system statistics are required, it is possible to know the total number of messages passed through the system in total or on a cell by cell basis. Also, if a time and date stamp are added at this point, it means that the number of messages can be tracked on an hourly, daily, monthly etc. basis. This can however poise a timing problem of its own, if all the messages have to be routed via a database table then this will significantly degrade performance for cells that are currently loaded. A possible answer is the introduction of a caching database system. When asked to store messages it keeps them cached for a certain period of time (e.g. one minute), or until a set number of messages had been received after it (e.g. 100). If the message is not requested in that time frame, then the message is released from the cache so others can be added. This cache can itself be implemented as a cell.

While described as facilitating the implementation of computer algorithms to resolve complex computer tasks, the system nevertheless is applicable to other tasks which are susceptible to functional decomposition to independent processes.

## Claims

1. A computer system comprising:
a plurality of independent cells, each cell comprising code that is either executable or is enabled to execute or operate by activator means associated with that cell, the cells not being directly operatively linked to each other and being capable of operation in the absence of each other;
trigger means responsive to a notification that one of a number of specified conditions exists to associate a predetermined cell with that condition and enable that cell to execute or to operate; and
a plurality of means responsive to respective conditions and each operative so that the trigger means is notified of the existence of such respective condition.

2. A computer system according to claim 1, further including data storage means accessible by at least some of the cells, to provide for the availability of specified data to more than one cell.

3. A computer system according to claim 1, further including message management means arranged to enable indirect communication between cells.

4. A computer system according to claim 4, in which the message management means also enables communication between the trigger means and the cells.

5. A computer system according to claim 1, further including execution management means for controlling the allocation of processing to the cells.

6. A computer system comprising a plurality of independent cells, each cell comprising code that is either executable or is enabled to execute or operate by activator means associated with that cell, the cells not being directly operatively linked to each other and being capable of operation in the absence of each other.

7. A computer system according to claim 6, further including data storage means accessible by at least some of the cells, to provide for the availability of specified data to more than one cell.

8. A computer system according to claim 6, further including message management means arranged to enable indirect communication between cells.

9. A computer system according to claim 6, further including execution management means for controlling the allocation of processing to the cells.

10. A computer system according to claim 6, in which each cell comprises an autonomous computational process.

11. A computer system according to claim 6, in which cells may only execute within predetermined time periods.

12. A computer system according to claim 6, in which selected cells have higher priority than other cells.

13. A computer system according to claim 12, in which only cells of predetermined priority are allowed to execute.

14. A computer system according to claim 8, further including caching means for caching messages.

15. A computer system comprising:
a plurality of independent cells, each cell comprising code that is either executable or is enabled to execute or operate by activator means associated with that cell, the cells not being directly operatively linked to each other and being capable of operation in the absence of each other; and
message management means arranged to enable indirect communication between cells.

16. A computer system according to claim 15, further including data storage means accessible by at least some of the cells, to provide for the availability of specified data to more than one cell.

17. A computer system according to claim 15, further including execution management means for controlling the allocation of processing to the cells.

18. A computer system comprising:
a plurality of independent cells, each cell comprising code that is either executable or is enabled to execute or operate by activator means associated with that cell, the cells not being directly operatively linked to each other and being capable of operation in the absence of each other;
trigger means responsive to a notification that one of a number of specified conditions exists to associate a predetermined cell with that condition and enable that cell to execute or to operate;
a plurality of means responsive to respective conditions and each operative so that the trigger means is notified of the existence of such respective condition;
data storage means accessible by at least some of the cells, to provide for the availability of specified data to more than one cell;
message management means arranged to enable indirect communication between cells and between the trigger means and the cells; and
execution management means for controlling the allocation of processing to the cells.

19. A computer program product adapted for use with a computer system in accordance with any preceding claim comprising means for conforming to the system to a structure as defined in any preceding claim.
